Europäisches Patentamt

European Patent Office

Office européen des brevets

(11) Veröffentlichungsnummer: **0 093 358**
**B1**

(12)
# EUROPÄISCHE PATENTSCHRIFT

(45) Veröffentlichungstag der Patentschrift:
**29.01.86**

(21) Anmeldenummer: **83104001.9**

(22) Anmeldetag: **23.04.83**

(51) Int. Cl.⁴: **D 01 D 4/08**, B 29 C 47/12,
F 16 K 3/02

(54) Verschliessbare Austragsdüse für thermoplastische Kunststoffe.

(30) Priorität: **03.05.82 DE 8212640 U**

(43) Veröffentlichungstag der Anmeldung:
**09.11.83 Patentblatt 83/45**

(45) Bekanntmachung des Hinweises auf die Patenterteilung:
**29.01.86 Patentblatt 86/5**

(84) Benannte Vertragsstaaten:
**BE CH DE FR GB IT LI LU NL**

(56) Entgegenhaltungen:
**DE - C - 216 391**
**FR - A - 2 236 102**
**FR - A - 2 450 761**
**GB - A - 1 208 234**
**GB - A - 1 480 692**

(73) Patentinhaber: **BASF Aktiengesellschaft,
Carl-Bosch-Strasse 38, D-6700 Ludwigshafen (DE)**

(72) Erfinder: **Kube, Wolfgang, Theaterplatz 10,
D-6700 Ludwigshafen (DE)**
Erfinder: **Kegel, Robert, Kalmitstrasse 15,
D-6710 Frankenthal (DE)**
Erfinder: **Valentin, Guenter,
Pfarrer-Friedrich-Strasse 43, D-6700 Ludwigshafen (DE)**
Erfinder: **Staufer, Dieter, Maxstrasse 56-58,
D-6700 Ludwigshafen (DE)**

## Beschreibung

Die Erfindung bezieht sich auf eine verschliessbare Austragsdüse für thermoplastische Kunststoffe gemäss Oberbegriff des Patentanspruchs 1.

Bei den bisher üblichen Austragsdüsen ist das Gehäuse der Düse durch ein Absperrorgan von der Kunststoffschmelzezufuhr trennbar. Dies hat folgende Nachteile:

— Beim Unterbrechen des Schmelzeaustrages durch Schliessen des Absperrorgans tropft Schmelze durch die Düsenöffnungen nach.

— In das leergetropfte Gehäuse kann Luft eindringen und Produktreste beispielsweise durch Oxidation schädigen, wodurch die Produktqualität beeinträchtigt wird. Bei Polyamiden z.B., bei denen hohe Kondensationstemperaturen angewandt werden, können bei diskontinuierlichem Kondensationsbetrieb Verkrackungen entstehen, die einen häufigen Ausbau der Düse und ihrer Reinigung, die sehr aufwendig ist, erforderlich machen.

Eine derartige Austragsdüse ist in der deutschen Patentschrift Nr. 216391 beschrieben. Ein Düsengehäuse ist austragsseitig durch zwei übereinander liegende Platten mit in ihrer Lage übereinstimmenden Bohrungen abgeschlossen. Dabei ist die untere Platte mittels einer zentralen Schraube drehbar an der oberen befestigt und an dieser festziehbar. Durch Drehung der unteren Platte können verschiedene Düsenquerschnitte eingestellt werden, wobei hierzu die Schraube ausser Betrieb der Düse gelöst und zum Betrieb wieder festgezogen werden muss. Die Ausserbetriebnahme für diese Verstellung sowie für eine längere Unterbrechung wird mittels eines Hahns in der Zuleitung zum Düsengehäuse vorgenommen; die Plattenanordnung dient lediglich zur Regelung des Querschnitts der Düsenöffnungen.

Es stellte sich daher die Aufgabe, eine verschliessbare Austragsdüse für thermoplastische Kunststoffe zu entwickeln, bei der zur Vermeidung der oben geschilderten Nachteile ein Schliessen und Öffnen der Düse austragsseitig während des Betriebs möglich ist.

Die Lösung dieser Aufgabe besteht in einer Austragsdüse der eingangs geschilderten Art mit den Merkmalen der Patentansprüche.

Weitere Einzeleinheiten und Vorteile der erfindungsgemässen Austragsdüse sind in der nachfolgenden Beschreibung eines in der Zeichnung dargestellten Ausführungsbeispiels erläutert.

Es zeigen

Fig. 1 die Austragsdüse schematisch im Längsschnitt, mit dem Antrieb für die verstellbare Lochplatte,

Fig. 2 Düsen- und Lochplatte in der Schnittansicht gemäss Pfeil A in Fig. 1.

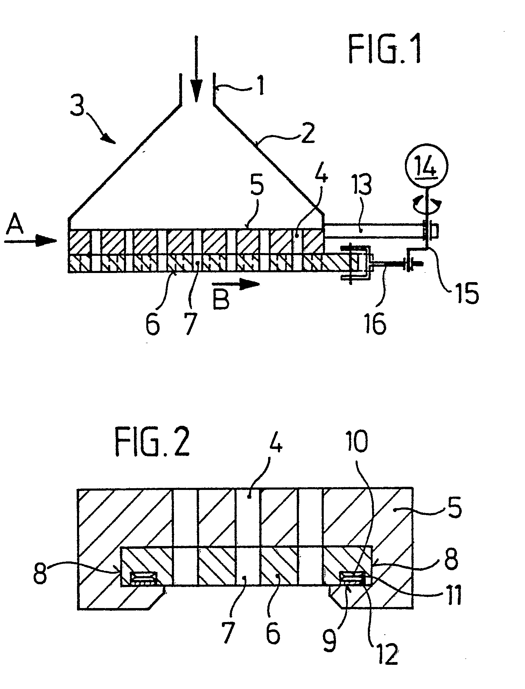

An das konisch erweiterte und mit einem Zuführungsstutzen 1 ausgestattete Gehäuse 2 der verschliessbaren Austragsdüse 3 ist eine mit Bohrungen oder sonstigen geeigneten Durchbrechungen 4 versehene Düsenplatte 5 angeschweisst (Fig. 1). Unmittelbar darunter befindet sich eine verschiebliche, als Absperrorgan dienende Lochplatte 6, die Öffnungen 7 in der gleichen Teilung wie bei der Düsenplatte aufweist und — wie in Fig. 2 zu sehen — in zwei zueinander parallelen Hinterschneidungen 8 der Düsenplatte verschiebbar oder drehbar gehalten und geführt ist. Damit die Bohrungen 4 der Düsenplatte 5 durch Verschieben (Pfeil B in Fig. 1) oder Verdrehen der Lochplatte 6 abgeschlossen werden können (gestrichelte Darstellung der Lochplatte), muss der Abstand der Bohrungen 4 in der Düsenplatte voneinander in der Verschiebe- oder Drehrichtung der Lochplatte 6 grösser sein als der Durchmesser deren Öffnungen 7. Dabei ist es erforderlich, dass die Lochplatte dichtend an der Düsenplatte anliegt.

Hierzu sind zwischen der Lochplatte 6 und den Führungsflächen 9 der Hinterschneidungen 8 Tellerfedern 10 eingefügt, die in Vertiefungen 11 der Lochplatte gehalten und über Gleitscheiben 12 an den Führungsflächen abgestützt sind, so dass die Lochplatte an die Düsenplatte gepresst wird.

Zum Bewegen der Lochplatte 6 ist auf einem am Gehäuse 2 befestigten Halter 13 ein Stellmotor 14 vorgesehen, der über eine mit der Motorwelle verbundene Kurbel 15, die auf eine an der Lochplatte angelenkte Schwinge 16 arbeitet, an dieser angreift. Als Antriebsmotor dient vorzugsweise ein pneumatischer oder hydraulischer Motor. Der Kurbelhub entspricht dem linearen Plattenweg zur konstruktiven Begrenzung der Endstellungen der Platte.

Bei drehbarer Lagerung der Lochplatte, beispielsweise mittels eines Drehstiftes an der Düsenplatte, könnte die Motorwelle z.B. direkt über ein Reib- oder Zahnrad am Umfang der Lochplatte antreiben.

Anstelle des Motors können selbstverständlich auch andere geeignete Antriebsmittel eingesetzt werden, beispielsweise pneumatische oder hydraulische Arbeitszylinder, die dann direkt an der Lochplatte angreifen.

Es versteht sich, dass die Austragsdüse im Rahmen der Erfindung bezüglich der beiden Platten 5 und 6 variiert werden kann, beispielsweise

— kann die Lochplatte über der Düsenplatte angeordnet sein

— kann die Lochplatte feststehen und die Düsenplatte beweglich sein

— können die Öffnungen in der Lochplatte grösser als die Durchbrechungen in der Düsenplatte sein oder aber auch die gleiche Gestalt und Grösse wie diese besitzen.

## Patentansprüche

1. Verschliessbare Austragsdüse für thermoplastische Kunststoffe, bestehend aus einem Gehäuse, einer dieses abschliessenden Düsenplatte mit Durchbrechungen für den Austrag des Kunststoffes in Strängen oder Fäden und einer weiteren, mit den Durchbrechungnen (4) der Düsenplatte (5) in und ausser Deckung bringbare Öffnungen (7) aufweisenden Lochplatte (6), die unmittelbar unter oder über der Düsenplatte angeordnet ist, wobei die Platten zueinander beweglich und dazu mit einem Antrieb verbunden sind, dadurch gekennzeichnet, dass eine der Platten Hinterschneidungen (8) aufweist, so dass Führungen für die andere Platte gebildet sind, und diese Platte mittels an Führungsflächen (9) unter Zwischenlage von Gleitelementen (12) abgestützten Federn (10) an die Platte mit den Hinterschneidungen gepresst wird.

2. Verschliessbare Austragsdüse nach Anspruch 1, dadurch gekennzeichnet, dass der Antrieb für eine verschiebbar ausgeführte Platte (6) aus einer an dieser gelenkig angreifenden Schwinge (16) und einem Stellmotor (14) besteht, die durch eine Kurbel (15) miteinander verbunden sind, wobei der Kurbelhub dem Weg der beweglichen Platte entspricht.

3. Verschliessbare Austragsdüse nach Anspruch 1, dadurch gekennzeichnet, dass eine drehbar ausgeführte Platte (6) durch ein an deren Umfang angreifendes, mit der Motorwelle in Verbindung stehendes Reib- oder Zahnrad antreibbar ist.

## Claims

1. A sealable discharge die for thermoplastics, comprising a housing, a dieplate which closes the latter except for perforations for discharge of the plastic in strands or filaments, and a further perforated plate (6), which has orifices (7) which can be brought into and out of alignment with the perforations (4) in the dieplate (5) and is located immediately below or above the dieplate, the plates being movable relative to one another and being connected to a drive for this purpose, wherein one of the plates has undercuts (8) forming guides for the other plate, and this other plate is pressed against the plate with the undercuts by means of springs (10) which bear against guide surfaces (9) via interposed sliding members (12).

2. A sealable discharge die as claimed in Claim 1, wherein the drive for a slidable plate (6) consists of a swinging arm (16) hingedly connected to the plate and an adjustment motor (14) connected to the swinging arm via a crank (15), the stroke of the crank corresponding to the travel of the movable plate.

3. A sealable discharge die as claimed in Claim 1, wherein a rotatable plate (6) can be driven by a friction wheel or gearwheel which is connected to the motor shaft and engages the periphery of said plate.

## Revendications

1. Tête d'extrusion obturable pour matières thermoplastiques, comprenant un corps, une plaque filière fermant ce corps et pourvue d'ouvertures pour l'extrusion de la matière thermoplastique sous forme de boudins ou de fils, et une plaque perforée (6) présentant des ouvertures (7) pouvant être mises en coïncidence et hors de coïncidence avec les ouvertures (4) de la plaque filière (5) et qui est disposée immédiatement au-dessous ou au-dessus de la plaque filière, ces plaques étant mobiles l'une par rapport à l'autre et à cet effet accouplées à un dispositif d'entraînement, caractérisée par le fait qu'une des plaques présente des contre-dépouilles (8), de sorte que des guides sont formés pour l'autre plaque, et cette autre plaque est serrée contre la plaque à contre-dépouilles par des ressorts (10) en appui contre des surfaces de guidage (9) avec interposition d'éléments de glissement (12).

2. Tête d'extrusion obturable selon la revendication 1, caractérisée par le fait que le dispositif d'entraînement pour une plaque (6) mobile en translation est constitué d'un bras oscillant (16) articulé à la plaque et d'un servomoteur (14), qui sont accouplés par une manivelle (15), la course de cette manivelle correspondant à celle de la plaque mobile.

3. Tête d'extrusion obturable selon la revendication 1, caractérisée par le fait qu'une plaque (6) mobile en rotation peut être entraînée par une roue de friction ou d'engrenage attaquant sa périphérie et accouplée à l'arbre du moteur.

FIG.1

FIG.2